# EUROPEAN PATENT APPLICATION

(11) **EP 1 375 321 A2**
(43) Date of publication of application: **02.01.2004**
(21) Application number: 03012608.0
(22) Date of filing: 03.06.2003
(51) Int. Cl.: B62J 23/00, B62M 9/12, B62J 39/00

(54) **Protective device for a bicycle rear derailleur**

(30) Priority: 20.06.2002 US 177812
(71) Applicant: Shimano Inc., Sakai-shi, Osaka (JP)
(72) Inventor: Yamamoto, Tomohisa, Sakai-shi, Osaka (JP)
(74) Representative: Hofmann, Harald

(57) **Abstract**

A protective device adapted to be attached to a bicycle for protecting a rear derailleur includes a mounting member structured for attachment to the bicycle in close proximity to the rear derailleur. A shock absorbing member extends from the mounting member and is dimensioned so as to be positioned between the bicycle frame and the rear derailleur.

## Description

### BACKGROUND OF THE INVENTION

The present invention is directed to bicycles and, more particularly, to a protective device for attachment to a bicycle for protecting a rear derailleur.

A typical bicycle has a frame comprising a head tube that rotatably supports a front fork and handlebar assembly, a top tube extending rearwardly from the head tube, a down tube extending downwardly at an angle from the head tube, a generally vertical seat tube having an upper portion connected to the rear end of the top tube, a bottom bracket connecting the lower portion of the seat tube and the rear end of the down tube, a pair of seatstays (tubes) extending rearwardly and downwardly from the upper portion of the seat tube, a pair of chainstays (tubes) extending rearwardly from the bottom bracket, and a pair of dropout members, each dropout member connecting the rear end of a seatstay to the rear end of a corresponding chainstay. A front wheel is rotatably supported by the front fork through a front wheel axle, and a rear wheel is rotatably mounted to the pair of dropout members through a rear wheel axle. Left and right of crank arms, each supporting a pedal, are attached to opposite ends of a crank axle which, in turn, is rotatably supported within the bottom bracket. Multiple front sprockets usually are mounted to the right crank arm coaxially with the crank axle, and multiple rear sprockets are mounted coaxially with and rotate with the rear wheel. A chain engages one of the front sprockets and one of the rear sprockets so that the rear wheel is driven in response to rotation of the crank arms. A front derailleur moves the chain among the plurality of front sprockets, and a rear derailleur moves the chain among the plurality of rear sprockets.

The rear derailleur often is rotatably mounted to the dropout member in close proximity to the rear sprockets. A spring typically biases the rear derailleur in a clockwise direction when viewed from the right side of the bicycle, and the actual rotational position of the rear derailleur changes depending on which front and rear sprockets are engaged by the chain.

During vigorous riding over rough terrain, jarring motion can cause the derailleur to rotate counterclockwise and strike the nearby chainstay. This causes undesirable noise and risks damage to the derailleur.

### SUMMARY OF THE INVENTION

The present invention is directed to a protective device adapted to be attached to a bicycle for protecting a rear derailleur. In one embodiment of the present invention, a mounting member is structured for attachment to the bicycle in close proximity to the rear derailleur. A shock absorbing member extends from the mounting member and is dimensioned so as to be positioned between the bicycle frame and the rear derailleur. When riding over rough terrain, the rear derailleur will strike the shock absorbing member rather than the chainstay, thus eliminating risk of damage to the rear derailleur.

The protective device may take many different forms. For example, and not to be limited thereto, the protective device may comprise an upper wall for positioning at an upper surface of the bicycle frame, a first side wall for positioning at a first side surface of the bicycle frame, and a shock absorbing member attached to the first side wall in some manner. If desired, the shock absorbing member may define an opening, and a fastener may extend through the opening for attaching the shock absorbing member to the first side wall. If the mounting member has a second side wall, then the shock absorbing member may be disposed between the first side wall and the second side wall, likewise with or without a fastener. The mounting member may include a bottom wall structured for positioning beneath a bottom surface of the bicycle frame, wherein the shock absorbing member is attached to the bottom wall in any suitable manner. If desired, the shock absorbing member may define an opening, wherein the bottom wall extends through the opening.

### BRIEF DESCRIPTION OF THE DRAWINGS

Fig. 1 is a side view of a rear portion of a bicycle illustrating a particular embodiment of a protective device according to the present invention for a bicycle rear derailleur;
Fig. 2 is a view taken along line II-II in Fig. 1;
Fig. 3 is a view taken along line III-III in Fig. 1; and
Figs. 4-7 are views taken along line III-III in Fig. 1 showing alternative embodiments of a protective device according to the present invention for a bicycle rear derailleur.

### DETAILED DESCRIPTION OF THE EMBODIMENTS

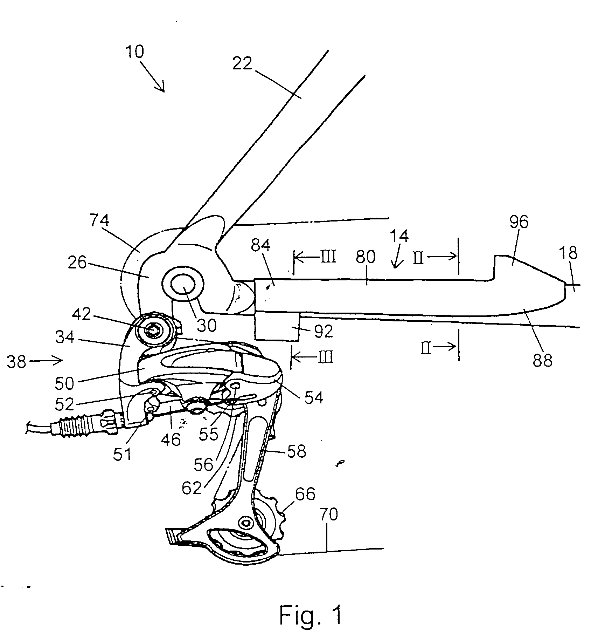

Fig. 1 is a side view of a rear portion of a bicycle 10 illustrating a particular embodiment of a protective device 14 according to the present invention. As shown in Fig. 1, bicycle 10 includes a chainstay 18 connected to a seatstay 22 through a dropout member 26. As is well known, the illustrated chainstay 18, seatstay 22 and dropout member 26 are one of a pair of such members that rotatably support a rear wheel (not shown) through an axle 30. A base member 34 of a rear derailleur 38 is rotatably mounted to dropout member 26 through a pivot shaft 42 in a known manner. Link members 46 and 50 are pivotably mounted to base member 34 through pivot pins 51 and 52, respectively, and to a movable member 54 through pivot pins 55 and 56, respectively. A chain guide 58 is pivotably mounted to movable member 54 through a pivot shaft (not shown). Chain guide 58 includes a guide pulley 62 and a tension pulley 66 for guiding a chain 70 among a plurality of rear sprockets 74 (shown schematically). A coil spring (not shown) typically is mounted around pivot shaft 42 for biasing base member 34 in a clockwise direction, and another coil spring (not shown) typically is mounted around the pivot shaft connecting chain guide 58 to movable member 54 for biasing chain guide 58 in a clockwise direction.

Protective device 14 comprises an elongated mounting member 80 with a first end 84 and a second end 88. A shock absorbing member 92 extends downwardly from the first end 84 of mounting member 80 and is dimensioned so as to be positioned between movable member 54 and/or chain guide 58 and chainstay 18. A chain guard 96 extends upwardly from the second end 88 of mounting member 80.

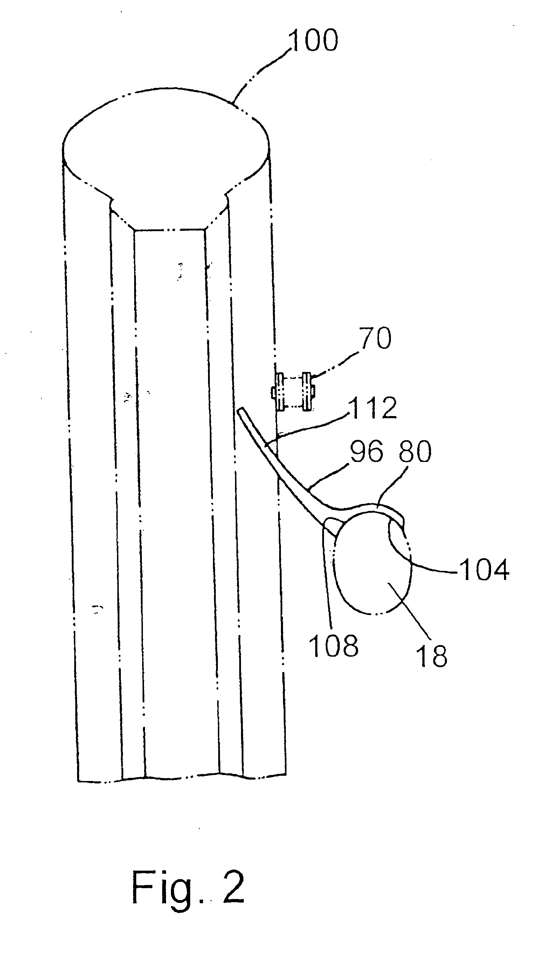

In this embodiment, chain guard 96 prevents chain 70 from contacting the rear wheel 100 (Fig. 2) in a manner shown in U.S. Patent No. 4,786,071. As shown in Fig. 2, mounting member 80 has a curved upper wall 104 for attaching to the curved upper surface 108 of chainstay 18 through an adhesive or some other means. Chain guard 96 extends upwardly and inwardly at an incline toward rear wheel 100, and it includes a chain guide surface 112 that is typically located laterally inwardly and below chain 70 when protective device 14 is attached to chainstay 18. Chain guide surface 112 deflects chain 70 outwardly whenever chain 70 moves inwardly and/or downwardly to prevent chain 70 from being caught by rear wheel 100.

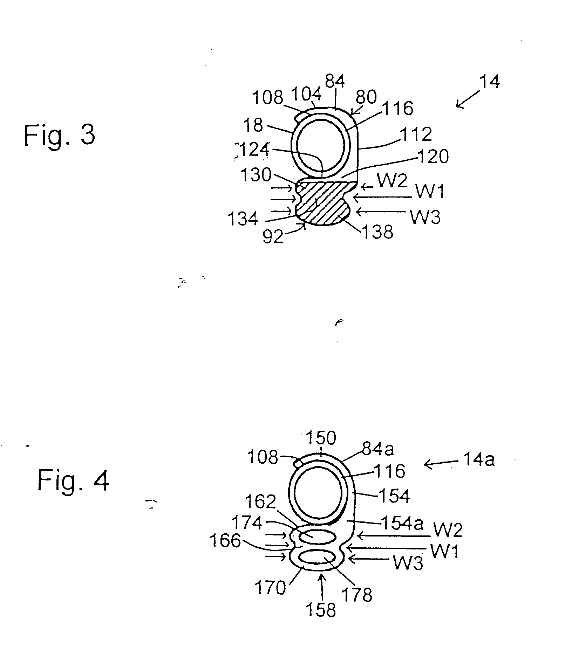

Fig. 3 is a view taken along line III-III in Fig. 1. As shown in Fig. 3, upper wall 104 of mounting member 80 at first end 84 is positioned at the upper (e.g., top) surface 108 of chainstay 18, a side wall 112 of mounting member 80 is positioned at a side surface 116 of chainstay 18, and a bottom wall 120 of mounting member 80 is positioned below a bottom surface 124 of chainstay 18. In this embodiment, chain guard 96, upper wall 104, side wall 112 and bottom wall 120 of mounting member 80 are formed as one piece from a material such as a synthetic resin or a metal plate, but of course the various structures may be formed by separate components and from different materials attached or bonded together by any suitable means.

In this embodiment, shock absorbing member 92 has a substantially completely solid cross section, and it includes an upper portion 130 attached to bottom wall 120 through an adhesive or some other means, an intermediate portion 134 disposed below the upper portion 130, and a lower portion 138 disposed below the intermediate portion 134. Intermediate portion 134 has a width W1 less than a width W2 of the upper portion 130 and a width W3 of the lower portion 138. Shock absorbing member 92 may comprise a resilient material such as rubber or some other material capable of absorbing forces from movable member 54 and/or chain guide 58. In general, shock absorbing member 92 may be a unitary structure or a structure formed from multiple components that move in such a manner to absorb forces from rear derailleur 38. Such forces could be absorbed by compression, deflection, telescoping and so on, whether or not the original shape of shock absorbing member 92 is restored after the shock is absorbed, and even by destruction of shock absorbing member 92. The decreased width of intermediate portion 134 facilitates compression and deflection in this embodiment.

Fig. 4 is a view taken along line III-III in Fig. 1 showing a protective device 14a that represents an alternative embodiment of the present invention. In this embodiment, first end 84a includes an upper wall 150 positioned at the upper surface 108 of chainstay 18 and a side wall 154 positioned at the side surface 116 of chainstay 18. A shock absorbing member 158 is disposed at a lower portion 154a of side wall 154 such that upper wall 150, side wall 154 and shock absorbing member 158 are formed as one piece from the same material such as rubber.

Of course, shock absorbing member 158 may be a separate component attached to side wall 154 by an adhesive or by some other suitable manner, and it may be formed from a material different from the other components as in the first embodiment. As in the first embodiment, shock absorbing member 158 includes an upper portion 162, an intermediate portion 166 disposed below the upper portion 162, and a lower portion 170 disposed below the intermediate portion 166. Intermediate portion 166 also has a width W1 less than a width W2 of the upper portion 162 and a width W3 of the lower portion 170. However, in this embodiment, upper portion 162 has a hollow portion 174, and lower portion 170 has a hollow portion 178 to give shock absorbing member 158 the shape of a figure 8. These hollow portions 174 and 178 further facilitate compression of shock absorbing member 158.

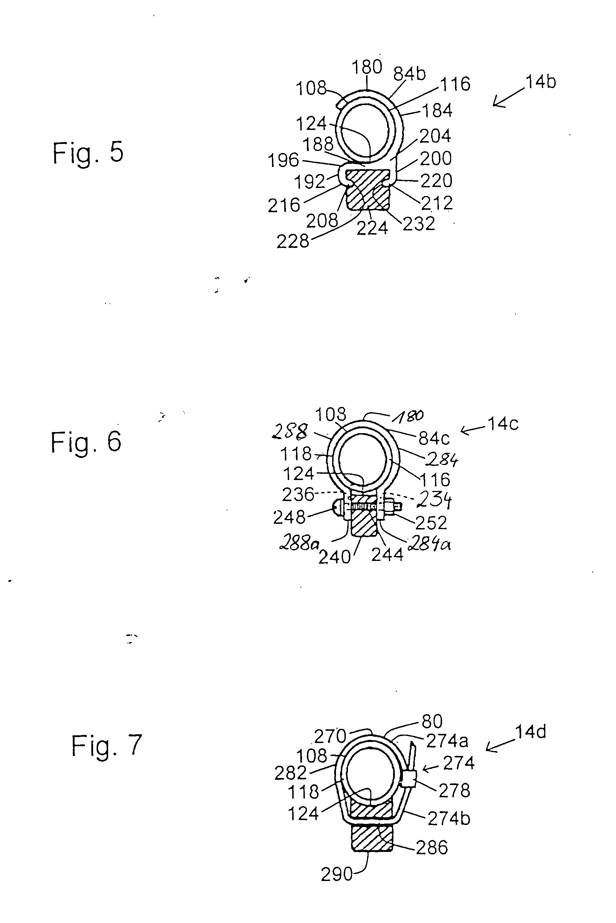

Fig. 5 is a view taken along line III-III in Fig. 1 showing a protective device 14b that represents another alternative embodiment of the present invention. In this embodiment, first end 84b includes an upper wall 180 positioned at the upper surface 108 of chainstay 18, an upper side wall 184 positioned at the side surface 116 of chainstay 18, a bottom wall 188 positioned below the bottom surface 124 of chainstay 18, a lower side wall 192 extending downwardly from the left edge 196 of bottom wall 188, a lower side wall 200 extending downwardly from the right edge 204 of bottom wall 188, and retaining projections 208 and 212 extending towards each other from the bottom edges 216 and 220 of lower side walls 192 and 200, respectively. A shock absorbing member 224 formed of rubber or some other resilient material having the overall shape of a square has retaining grooves 228 and 232 that engage retaining projections 208 and 212, respectively, so that shock absorbing member is retained to bottom wall 188 and lower side walls 192 and 200.

Fig. 6 is a view taken along line III-III in Fig. 1 showing a protective device 14c that represents another alternative embodiment of the present invention. In this embodiment, first end 84c includes an upper wall 180 positioned at the upper surface 108 of chainstay 18, a side wall 284 positioned at the side surface 116 of chainstay 18, and a side wall 288 positioned at a side surface 118 of chainstay 18. A portion 284a of side wall 224 having an opening 234 and a portion 288a of side wall 288 having an opening 236 both extend below the bottom surface 124 of chainstay 18. A shock absorbing member 240 formed of rubber or some other resilient material having the shape of a rectangle is disposed between portions 284a and 288a. Shock absorbing member 240 has an opening 244 that aligns with openings 234 and 236 so that a fastener such as a screw 248 can extend through openings 234, 236 and 244 and mesh with a nut 252 to retain shock absorbing member 240 to side walls 284 and 288.

Fig. 7 is a view taken along line III-III in Fig. 1 showing a protective device 14d that represents another alternative embodiment of the present invention. In this embodiment, mounting member 80 does not have an elongated shape, and chain guard 96 is omitted. Instead, mounting member 80 includes an upper wall 270 positioned at the upper surface 108 of chainstay 18, a side wall 274 comprising side wall sections 274a and 274b connected together by a connector 278 and positioned at the side surface 116 of chainstay 18, a side wall 282 positioned at the side surface 118 of chainstay 18, and a bottom wall 286 positioned below bottom surface 124 of chainstay 18. A shock absorbing member 290 formed of rubber or some other resilient material having the shape of a rectangle is disposed below bottom surface 124 of chainstay 18. Bottom wall 286 extends through an opening 294 in shock absorbing member 290 to retain shock absorbing member 290 to bottom surface 124 of chainstay 18. Mounting member 80 may be formed very simply from a zip tie.

While the above is a description of various embodiments of the present invention, further modifications may be employed without departing from the spirit and scope of the present invention. For example, the size, shape, location or orientation of the various components may be changed as desired. Mounting member 80 may be attached to dropout member 26 or be positioned in any convenient manner that accomplishes a desired shock absorbing function. Components that are shown directly connected or contacting each other may be spaced apart or may have intermediate structures disposed between them. The functions of one element may be performed by two, and vice versa. The structures and functions of one embodiment may be adopted in another embodiment. It is not necessary for all advantages to be present in a particular embodiment at the same time. Every feature that is unique from the prior art, alone or in combination with other features, also should be considered a separate description of further inventions by the applicant, including the structural and/or functional concepts embodied by such feature(s). Thus, the scope of the invention should not be limited by the specific structures disclosed or the apparent initial focus on a particular structure or feature.

## Claims

1. A protective device for attachment to a bicycle frame for protecting a rear derailleur comprising: a mounting member (80) structured for attachment to the bicycle in close proximity to the rear derailleur; and a shock absorbing member (92; 158; 224; 240; 290) extending from the mounting member (80) and dimensioned so as to be positioned between the bicycle frame and the rear derailleur.

2. The device according to claim 1 wherein the mounting member (80) and the shock absorbing member (92; 158; 224; 240; 290) are one piece.

3. The device according to claim 1 or 2 wherein the mounting member (80) comprises: an upper wall (104; 150; 180; 270) for positioning at an upper surface of the bicycle frame; and a first side wall (112; 154; 192; 284; 274) for positioning at a first side surface of the bicycle frame.

4. The device according to claim 3 wherein the mounting member comprises a second side wall (200; 282, 288), and wherein the shock absorbing member (92; 158; 224; 240; 290) is disposed between the first side wall (112; 154; 192; 274; 284) and the second side wall (200; 282, 288).

5. The device according to claim 4, wherein the second side wall (200; 282, 288) is structured for positioning at a second side surface of the bicycle frame.

6. The device according to any one of claims 3 to 5, wherein the mounting member (80) further comprises a bottom wall (188; 286) structured for positioning beneath a bottom surface of the bicycle frame.

7. The device according to any one of claims 3 to 6, wherein the shock absorbing member (92; 158; 224; 290) is attached to the first side wall (112; 154; 192; 284; 274) and/or to the bottom wall (188; 286) of the mounting member (80).

8. The device according to any one of claims 1 to 7, wherein the shock absorbing member (92; 158; 224; 240; 290) defines an opening (244; 294) therethrough.

9. The device according to claim 8 further comprising a fastener (248) extending through the opening (244; 294) for attaching the shock absorbing member (92; 158; 224; 240; 290) to the mounting member (80).

10. The device according to claim 9 wherein the fastener (248) extends through the first side wall (112; 154; 192; 284; 274) and/or through the second side wall (200; 282, 288).

11. The device according to claim 8, 9 or 10, when dependent from claim 6, wherein the bottom wall (188; 286) extends through the opening (244; 294).

12. The device according to any one of claims 1 to 11 wherein the shock absorbing member (92; 158; 224; 240; 290) comprises a resilient material in particular rubber.

13. The device according to any one of claims 1 to 12 wherein the shock absorbing member (92; 158; 224; 240; 290) is substantially completely solid.

14. The device according to any one of claims 1 to 12 wherein the shock absorbing member (92; 158; 224; 240; 290) has a hollow portion.

15. The device according to any one of claims 1 to 14 wherein the mounting member (80) has an elongated shape with a first end (84) and a second end (88), and wherein the shock absorbing member (92; 158; 224; 240; 290) extends downwardly from the first end of the mounting member (80).

16. The device according to claim 15 further comprising a chain guard (96) extending upwardly from the second end (88) of the mounting member (80).

17. The device according to any one of claims 1 to 16 wherein the shock absorbing member (92; 158; 224; 240; 290) comprises: an upper portion (130; 162) attached to the mounting member (80); an intermediate portion (134; 166) disposed below the upper portion; and a lower portion (138; 170) disposed below the intermediate portion; wherein the intermediate portion has a width less than a width of the upper portion and/or the lower portion.

18. The device according to claim 17 wherein the upper portion (162) has an first hollow portion (174), and wherein the lower portion (170) has a second hollow portion (178).
